# EUROPÄISCHE PATENTANMELDUNG

(11) **EP 1 226 916 A1**
(43) Veröffentlichungstag der Anmeldung: **31.07.2002**
(21) Anmeldenummer: 01101981.7
(22) Anmeldetag: 29.01.2001
(51) Int. Cl.: B29C 45/16

(54) **Vorrichtung und Verfahren zur Herstellung von Objekten aus Kunststoff**

(71) Anmelder: FOBOHA GmbH, D-77716 Haslach (DE)
(72) Erfinder: Bodmer, Werner, 77716 Haslach (DE); Armbruster, Rainer, 77709 Wolfach (DE)
(74) Vertreter: Frei, Alexandra Sarah

(57) **Zusammenfassung**

Die Erfindung betrifft eine Vorrichtung (1) und ein Verfahren zum Spritzgiessen von Objekten (25) mit mehreren Kunststoffkomponenten. Diese Vorrichtung (1) weist eine erste, fest angeordnete Formhälfte (3), eine zweite, zum Öffnen und Schliessen der Vorrichtung (1) gegenüber der ersten Formhälfte (3) beweglich angeordneten Formhälfte (6) auf. Zudem weist die Vorrichtung (1) mindestens zwei weitere, gegenüber der ersten und der zweiten Formhälfte (3, 6) gemeinsam beweglich angeordnete Formhälften (10, 11) auf, die in Schliessstellung der Vorrichtung (1) zwischen der ersten und der zweiten Formhälfte (3, 6) angeordnet sind, so dass in zwei Trennebenen (32, 33), nämlich in einer ersten und einer zweiten Trennebene (32, 33) Kavitäten (20, 21) gebildet werden. Die beiden weiteren, gemeinsam beweglich angeordneten Formhälften (10, 11) weisen Mittel (22) auf, die bei geöffneter Vorrichtung (1) zum Transportieren des Objekts (25) aus einer ersten Kavität (21.1) in eine zweite Kavität (21.2) dienen, derart dass das Objekt (25) in der zweiten Kavität (21.2) mit einer weiteren Materialkomponente umspritzt werden kann.

## Beschreibung

Die Erfindung betrifft eine Vorrichtung und ein Verfahren zum Herstellen von Objekten aus Kunststoff, z.B. Bürsten, insb. Zahnbürsten, gemäss dem Oberbegriff der unabhängigen Patentansprüche.

Objekte aus Kunststoff, insb. Zahnbürsten, werden häufig aus unterschiedlichen Materialien und mehrfarbig gefertigt. Bei Zahnbürsten beispielsweise werden weiche mit harten Materialien kombiniert, wobei die weichen Materialien z.B. Griffflächen oder Gelenkstellen bilden. Solche Zahnbürsten die aus mehreren Materialkomponenten bestehen oder mehrere Farben aufweisen, werden in speziellen Werkzeugen gefertigt.

Aus dem Stand der Technik sind verschiedene Vorrichtungen und Verfahren zur Herstellung von Zahnbürsten aus mehreren Materialkomponenten bekannt. EP 0 0742 090 zeigt beispielsweise eine Vorrichtung die auf einem Rotationsteller (Drehkreuzwerkzeug) basiert. Einzelne Materialkomponenten werden dabei von einer Seite in mehrteilige Kavitäten gespritzt, die bereichsweise mit dem Rotationsteller in einer Ebene liegend wirkverbunden sind. Die mit einer weiteren Komponente zu umspritzenden Objekte werden Vorrichtung in der Ebene liegend mit dem Rotationsteller von einer Kavität in die nächste bewegt, wobei sie in einem Bereich gehalten werden, der nur eine Materialkomponente aufweist. Alle Kavitäten weisen die selbe Trennebene auf.

Diese Vorrichtung weist den Nachteil auf, dass sie aufgrund der nebeneinander liegenden Kavitäten sehr gross baut, resp. deshalb in einem Zyklus nur wenige Objekte gefertigt werden können. Eine Integration einer Vorrichtung gemäss diesem Prinzip in eine standardisierte Spritzgiessmaschine bei der die Formhälften an Holmen geführt werden, ist unwirtschaftlich, da der Holmabstand der Spritzgiessmaschine normiert ist und die maximalen Abmessungen dadurch limitiert sind.

Es ist Aufgabe der Erfindung eine Vorrichtung und ein Verfahren zu zeigen, welche eine optimierte Herstellung von Objekten aus Kunststoff aus mehreren Materialkomponenten und Farben ermöglicht.

Die Erfindung wird anhand einer Zahnbürste näher erläutert. Für den Fachmann ist es klar, dass sich die Erfindung aber nicht nur auf die Herstellung solcher Objekte beschränkt.

Die Aufgabe wird durch die in den Patentansprüchen definierte Erfindung gelöst.

Bürstenkörper von Zahnbürsten bestehen in der Regel aus einem Griff, der zum Halten der Bürste dient, einem Kopf, an dem die Borsten der Bürste befestigt sind, und einem Stiel der den Griff mit dem Kopf verbindet.

Zahnbürsten sowie andere Objekte aus Kunststoff, die aus mehreren Komponenten oder Farben bestehen, werden heute durch Spritzgiessen hergestellt. Die einzelnen Farben und Materialkomponenten werden dabei nacheinander in Kavitäten gespritzt in welche z.T. zu umspritzende Zwischenprodukte eingebracht worden sind. Die Objekte werden mittels mechanischen Hilfen von einer Kavität in die nächste bewegt indem sie in einem geeigneten Bereich gehalten werden, die nur eine Materialkomponente aufweisen. Ein Bürstenkörper einer Zahnbürste z.B. wird vorzugsweise im Bereich des Kopfs der Bürste gehalten, während dem er von einer Kavität in die nächste eingebracht wird, da dieser Bereich in der Regel nicht mit mehreren Materialien versehen wird. Über die Wahl der Materialien, insbesondere deren Schmelzpunkte, wird garantiert, dass eine Komponente beim Umspritzen mit einer weiteren Komponente keinen Schaden nimmt, resp. unkontrolliert schmilzt.

Die Formhälften einer Spritzgiessform zum Herstellen von Spritzgiessteilen werden üblicher Weise in einer Spritzgiessmaschine auf Aufspannplatten befestigt. Eine erste Formhälfte wird dabei auf einer feststehenden Aufspannplatte und eine zweite Formhälfte an einer an meist vier Holmen geführten beweglichen Aufspannplatte befestigt. Da die beiden Formenhälften dabei zwischen den Holmen der Spritzgiessmaschine angeordnet sind, ist ihre maximale Ausdehnung durch den Abstand der Holmen begrenzt. Die heutigen Formen zum Herstellen von Objekten aus Kunststoff mit mehreren Materialkomponenten basieren auf Drehkreuzwerkzeugen mit Rotationstellern auf denen die Teilprodukte von einer Kavität in eine andere bewegt werden. Die Kavitäten sind dabei nebeneinander auf einem Kreis in einer Ebene angeordnet. Um von einer Kavität in die nächste zu gelangen werden die Objekte oder die Kavitäten um die Achse des Drehtellers bewegt, die parallel zu den Holmen der Spritzgiessmaschine angeordnet ist. Diese Anordnung birgt den erheblichen Nachteil, dass die Anzahl der Objekte aufgrund der engen Platzverhältnisse massiv begrenzt ist.

Die hier offenbarte Erfindung zeigt eine Vorrichtung und ein Verfahren welche die Herstellung von Objekten aus Kunststoff mit mehreren Material-, resp. Farbkomponenten erheblich verbessert. Im Unterschied zu den aus dem Stand der Technik bekannten Verfahren werden die einzelnen Material-, resp. Farbkomponenten nicht in einer Ebene auf einem Rotationsteller (Drehkreuzwerkzeug), sondern in einem Werkzeug mit mehreren Etagen (Trennebenen) hergestellt. Es handelt sich hierbei um eine Weiterentwicklung einer Spritzgiesstechnologie derselben Anmelderin, die z.T. schon aus WO 99/28108 bekannt ist.

Die hier offenbarte Erfindung beruht vereinfacht dargestellt darauf, dass zwischen einer ortsfesten ersten und einer beweglichen zweiten Formhälfte, die je mindestens eine Kavitätenhälfte aufweisen, ein dritter Formträger um eine Achse drehbar und in einem Winkel zu dieser verschiebbar angeordnet ist, der zur Aufnahme mindestens einer dritten und einer vierten Formhälfte mit je mindestens zwei Kavitätenhälfte dient, welche Kavitätenhälften der dritten und vierten Formhälfte alternativ mit den Kavitätenhälften der ersten oder der zweiten Formhälfte wirkverbindbar sind. Diese weiteren Formhälften weisen Mittel auf, um Objekte (Zwischenprodukte) im Bereich der weiteren Formhälften von einer Kavitätenhälfte in eine andere einzubringen, damit sie in der anderen Kavität mehrseitig mit einer weiteren Materialkomponente umspritzt werden können. Diese Mittel sind vorzugsweise Schieber die zumindest teilweise in eine Kavität integriert sind.

Die Drehachse des dritten Formträgers ist vorzugsweise im Wesentlichen senkrecht zur Bewegungsrichtung des beweglichen zweiten Formträgers und zudem in derselben Richtung wie die bewegliche zweite Formhälfte translatorisch verschiebbar angeordnet. Die dritte und die vierte Formhälfte werden auf zwei gegenüberliegenden Seiten des dritten Formträgers befestigt und wirken im geschlossenen Zustand der gesamten Form alternativ in zwei Trennebenen mit der ersten oder mit der zweiten Formhälfte zusammen, so dass auf jeder Seite des beweglichen Formträgers mindestens eine Kavität durch die Kavitätenhälften der Formhälften gebildet wird. Durch dieses Spritzen von Materialkomponenten in mehreren Ebenen wird erreicht, dass im Unterschied zu den aus dem Stand der Technik bekannten Drehkreuzwerkzeugen mehr mehrseitig umspritzte Objekte mit einem Werkzeug herstellbar sind. Die zum Dichten der Form erforderlichen Schliesskräfte sind infolge der mehreren, vergleichbar kleineren Trennebenen entsprechend geringer.

Die Bewegungen der zweiten Formhälfte, sowie der am drehbaren Formträger befestigten dritten und der vierten Formhälfte sind vorzugsweise miteinander koordiniert. Die Koordination kann wie folgt ausgestaltet sein. Beim Öffnen der Form wird die zweite Formhälfte relativ zur ersten Formhälfte translatorisch bewegt. Gleichzeitig wird der beweglich angeordnete Formträger mit der dritten und der vierten Formhälfte, die im geschlossenen Zustand zwischen der ersten und der zweiten Formhälfte angeordnet sind, mit in etwa halber Geschwindigkeit der zweiten Formhälfte translatorisch in derselben Richtung wie die zweite Formhälfte bewegt, so dass die beiden Trennebenen symmetrisch geöffnet werden. Die Bewegung wird so weit geführt, bis der beweglich angeordnete Formträger mit der dritten und der vierten Form um seine Achse gedreht werden kann, so dass die Objekte aus einer ersten Materialkomponente von einer Kavität im Bereich der ersten Trennebene, auf der Seite der feststehenden ersten Formhälfte, in eine Kavität im Bereich der zweiten Trennebene auf der Seite der beweglichen zweiten Formhälfte bewegt werden können.

Bei Bürstenkörpern beispielsweise, die an Ihrem Griff umgängig (z.B. unten und oben) mehrere Materialkomponenten oder Farben aufweisen, ist es erforderlich, dass die Kavitäten für die unterschiedlichen Materialkomponenten unterschiedliche Formen aufweisen. Deshalb ist ein Wechsel der Kavität für die zweite Materialkomponente erforderlich. Die Objekte werden zu diesem Zweck in einem Bereich gehalten, indem keine zweite Komponente angespritzt wird und werden so von der ersten in eine weitere Kavität eingebracht. Zahnbürsten werden bevorzugt im Bereich des Bürstenkopfs, bei den Öffnungen für die Borsten, gehalten. Die Halterung für das Überführen der Objekte von einer Kavität in eine weitere ist bevorzugt in die mit dem dritten Formträger mitbewegten Formhälften integriert, resp. bildet einen Teil der Kavitäten selber.

Der beweglich angeordnete mittlere Formträger kann bei Bedarf mehr als zwei gegenüberliegende Bereiche aufweisen, die zur Aufnahme von Formhälften geeignet sind. Dadurch ist es z.B. möglich, dass Objekte beim Bewegen von einer ersten in eine zweite Spritzposition einer Kühlphase unterworfen werden, fertige Teile entnommen werden oder weitere Komponenten gespritzt werden.

Der bewegliche Formträger wird bevorzugt durch mindestens eine z.B. an Holmen der Spritzgiessmaschine verschiebbar gelagerte Traverse geführt. Besonders Vorteilhaft ist eine Anordnung mit zwei Traversen die den Formträger auf zwei Seiten führen und unabhängig voneinander bewegt werden können, so dass der Formträger und die ihm zugeordneten Formhälften dennoch besonders einfach ein und ausgebaut werden können.

Die Rotationslagerung des drehbaren Formträgers ist bevorzugt derart ausgestaltet, dass Medien und Informationen wie Kühlflüssigkeiten, Hydrauliköl, Strom und Daten koaxial im Bereich des Rotationslager übergeben, resp. ausgetauscht werden. Die Lager sind bevorzugt so ausgestaltet, dass keine Begrenzung in einer Drehrichtung auftritt.

Die Form, resp. die Formhälften und/oder die Formträger weisen bevorzugt Mittel zur Messung des Zustands des Verarbeitungsprozesses und/oder Mittel zur Speicherung des Zustands des Verarbeitungsprozesses auf. Diese Mittel können dazu verwendet werden, um bspw. bei einem Werkzeugwechsel die optimalen Parameter einzustellen. Die Formhälften werden bevorzugt über Normschnittstellen mit der Spritzgiessmaschinen verbunden, so dass eine maximale Austauschbarkeit garantiert wird. Durch eine Normierung von Schnittstellen zur Übergabe von Medien wie Kühlflüssigkeiten (Wasser, Gas, Öl), Hydraulik, elektrische und mechanische Energie, sowie auch Informationen und Signalen, ist es möglich Formen und Spritzgiessmaschinen derart aufeinander abzustimmen, dass ein Wechsel in einem Herstellungsprozess in sehr kurzer Zeit möglich ist. Die Schnittstellen sind so definiert, dass sie für mehrere Formen geeignet kombinierbar sind.

Die hier offenbarten Vorrichtungen zum Spritzgiessen von Objekten aus mehreren Kunststoffkomponenten weisen bevorzugt Mittel zur Speicherung von Informationen auf. Dabei handelt es sich z.B. um Mikroprozessoren, Speichereinheiten, usw. Diese sind mit Vorteil in einer Formhälfte integriert und beinhalten relevante Daten bezüglich der Form, eines Herstellungsprozesses, der verwendeten Materialien, usw. Diese Mittel zur Speicherung sind über definierte Schnittstellen mit der Spritzgiessmaschine und falls erforderlich weiteren Geräten verbunden. Die Schnittstellen sind derart konzipiert, dass sie vielfältig einsetzbar sind. Es ist somit möglich z.B. mehrere Formen für eine bestehende Maschine, mit einer definierten Schnittstelle, zu konstruieren. Die Formen weisen entsprechend korrespondierende Schnittstelle auf. Die Formen beinhalten Mittel zur Speicherung von Informationen. Auf diesen werden beim Herstellungsprozess alle relevanten Daten gespeichert. Diese werden rechnerisch oder mittels Tests vorab oder während dem Produktionsprozess ermittelt. Diese Daten sind dabei nicht fix, sondern sind bei Bedarf veränderbar, derart, dass z.B. gewisse Erfahrungswerte berücksichtigt werden. Ist während der Produktion ein Wechsel des Herstellungsprozesses erforderlich, werden die relevanten Daten bei Bedarf aktualisiert, wirkverbundene Schnittstellen von Form und Spritzgiessmaschine gelöst, die Form aus der Spritzgiessmaschine entnommen und durch eine andere ersetzt die ebenfalls eine wirkverbindbare, korrespondierende Schnittstelle aufweist. Die Schnittstellen für die Übergabe von Medien weisen mit Vorteil selbstdichtende Kupplungen auf. Diese sind derart ausgebildet, dass die Schnittstellen ohne signifikanten Verlust von Medien trenn- und verbindbar sind. Beim Einsetzen einer Form in eine Spritzgiessmaschine werden die Schnittstellen der Form und der Maschine wirkverbunden. Aus dem Mittel zur Speicherung von Daten werden z.B. alle relevanten Daten an die Spritzgiessmaschine übergeben, derart, dass diese sich der Form optimal anpasst. Dabei werden z.B. Volumenströme des Kühlmittels, die Temperatur der Heizelemente, der Schliessdruck der Maschine, Zykluszeiten, Einspritzparameter, usw. übergeben. Die Mittel zur Speicherung von Daten können bei Bedarf auch oder alternativ aus einem Mikroprozessor bestehen, der z.B. die Werte von Sensoren überwacht oder Stellgrössen bedient. Die relevanten Daten werden mit Vorteil als digitale Signale übermittelt. Eine entsprechende Vorrichtung kann auch zur Sicherung des Produktionsprozesses verwendet werden, indem beispielsweise Sicherheitsfunktionen überwacht und ausgeführt werden. Z.B. ist es möglich Servicegrössen zu überwachen, die bestimmen wann eine Form einer Wartung bedarf (bspw. Anzahl der Zyklen, usw.). In einer Maschine kann mehr als eine Schnittstelle verwendet werden.

Z.B. für Montagespritzguss können sowohl die feststehende erste als auch die bewegliche zweite Formhälfte Mittel für einen Wechsel von Kavitäten aufweisen. Dadurch ist es möglich zusätzliche Materialkomponenten einzubringen.

Das hier offenbarte Verfahren zum Spritzgiessen eines Objekts aus mehreren Kunststoffkomponenten kann vereinfacht wie folgt beschrieben werden. In einem ersten Schritt wird in einer Arbeitsposition der Spritzgiessvorrichtung ein erster flüssiger Kunststoff im Bereich einer ersten Trennebene der Spritzgiessvorrichtung zur Bildung eines Objekts in eine erste Kavität gespritzt. In einem zweiten Schritt wird das Objekt aus dem ersten Kunststoff nach dem Erstarren oder in teilplastischem Zustand nach dem Öffnen der Spritzgiessvorrichtung, aus der ersten Kavität im Bereich der ersten Trennebene in eine zweite Kavität im Bereich einer zweiten, gegenüber der ersten beabstandeten Trennebene gebracht, wo es in einem dritten Schritt in Arbeitsposition der Spritzgiessvorrichtung mit einer weiteren Kunststoffkomponente umspritzt wird. Vorteilhaft Weise wird, währenddem in der zweiten Kavität das Objekt mit der weiteren Kunststoffkomponente umspritzt wird, gleichzeitig in der ersten Kavität ein weiteres Objekt gespritzt wird

Die Erfindung wird anhand der nachfolgenden Figuren näher erläutert. Es zeigen schematisch und stark vereinfacht:
- Figur 1: eine Vorrichtung zur Herstellung Zahnbürsten,
- Figur 2: die Vorrichtung gemäss Figur 1 in einer weiteren Darstellung,
- Figur 3: einen Ausschnitt aus Figur 2.

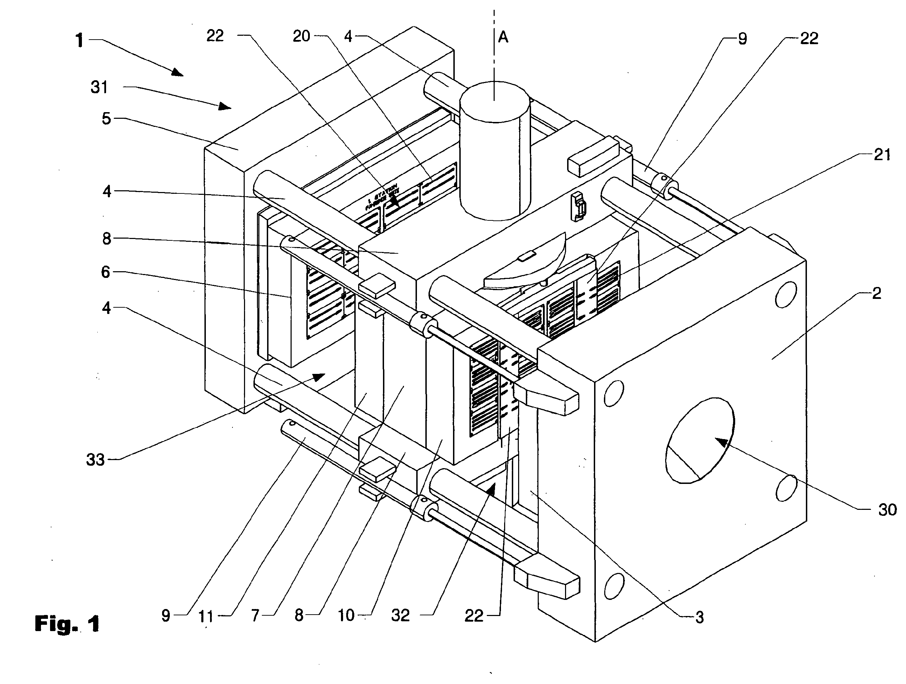

**Figur 1** zeigt schematisch und stark vereinfacht eine bevorzugte Ausführungsform einer erfindungsgemässen Spritzgiessform 1 zur Herstellung von Zahnbürsten in einer perspektivischen Darstellung. Ein erster, feststehender Formträger 2 dient als Basis für eine erste, feststehende Formhälfte 3. Vier mit dem ersten Formträger 2 verbundene Holme 4 dienen zur Lagerung eines zweiten, entlang den Holmen 4 verschiebbar angeordneten Formträgers 5. Der Formträger 5 dient als Basis für eine zweite, verschiebbar angeordnete Formhälfte 6.

Zwischen dem ersten und dem zweiten Formträger 2, 5 ist ein dritter Formträger 7 zu erkennen, der hier zwischen zwei Traversen 8 um eine Achse A drehbar gelagert und mit den Traversen verschiebbar angeordnet ist und als Basis für eine dritte und eine vierte Formhälfte 10, 11 dient. Die Achse A steht im Wesentlichen senkrecht zu den Holmen 4. Die Traversen 8 sind entlang den Holmen 4 unabhängig voneinander verschiebbar angeordnet, so dass der dritte Formträger 7 von oben besonders einfach zwischen den Holmen ein- und ausgebaut werden kann. Die Traversen 8 sind über Stellmittel, hier in der Form von Hydraulikzylindern 9, entlang der Holme 4 verschiebbar.

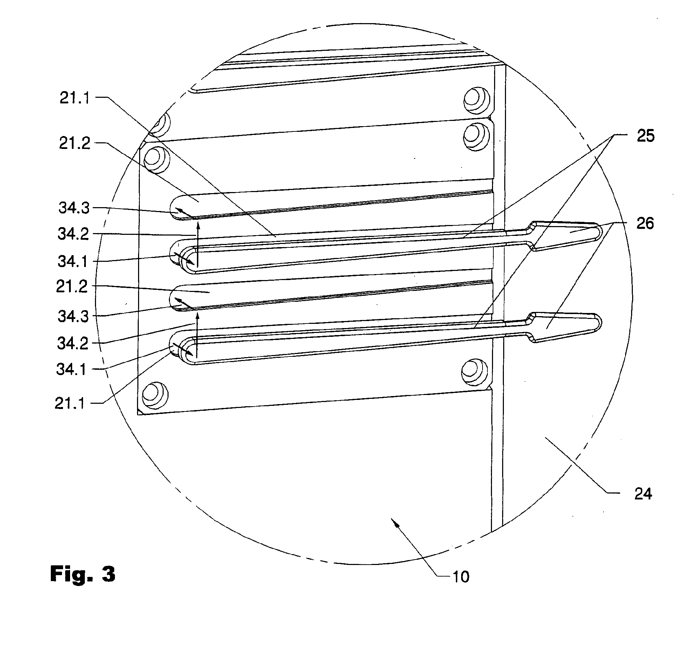

Die Vorrichtung 1 ist in geöffneter Position dargestellt, so dass Kavitäten 20 der beweglichen, zweiten Formhälfte 6 und Kavitäten 21 der dritten Formhälfte 10 zu erkennen sind. Die dritte und die vierte Formhälfte 10, 11 weisen Schieber 22 auf, die zum Bewegen von Objekten aus einer ersten Materialkomponente von einer ersten Kavität in eine weitere dienen (vgl. hierzu Beschreibung zu Figur 3), damit die Objekte auf mehreren Seiten umspritzt werden können. Die Bewegung der Schieber ist so ausgebildet, dass die Objekte aus der ersten Kavität heraus bewegt, verschoben und in eine zweite Kavität eingebracht werden, so dass sie mit einer weiteren Materialkomponente umspritzt werden können.

Die Spritzgiessform 1 wird mit einer Spritzgiessmaschine (nicht näher dargestellt) verwendet. Die Spritzgiessmaschine weist Mittel auf, um die Formhälften 3, 6, 10, 11 während des Spritzgiessvorgangs gegeneinander zu pressen, so dass Hohlräume durch die Kavitäten 20, 21 gebildet werden. Bei den Holmen 4 kann es sich um Holmen der Spritzgiessmaschine handeln oder um separate Führungsmittel.

Kunststoffschmelze wird durch gegenüber den Formhälften 3, 6 angeordnete Öffnungen 30, 31 in den Formträgern 2, 5 im geschlossenen Zustand (Arbeitsposition) der Spritzgiessform 1 in die durch Formhälften 3, 6, 10, 11 gebildeten Kavitäten 20, 21 eingepresst. Die Öffnungen 30, 31 gehen in Kanäle mit Verzweigungen über, die sich durch den ersten und den zweiten Formträger 2, 5 bis in die Kavitäten 20, 21. Die Vorrichtung zur Einbringung der Schmelze durch die Öffnung 30, 31 im zweiten Formträger 5 ist beweglich angeordnet, so dass die Vorrichtung 1 geöffnet und geschlossen werden kann. Wie zu erkennen ist, werden im Unterschied zum den aus dem Stand der Technik bekannten Vorrichtungen werden Objekte unterschiedlicher Form gleichzeitig in mehreren, gegeneinander beabstandeten Trennebenen 32, 33 gespritzt.

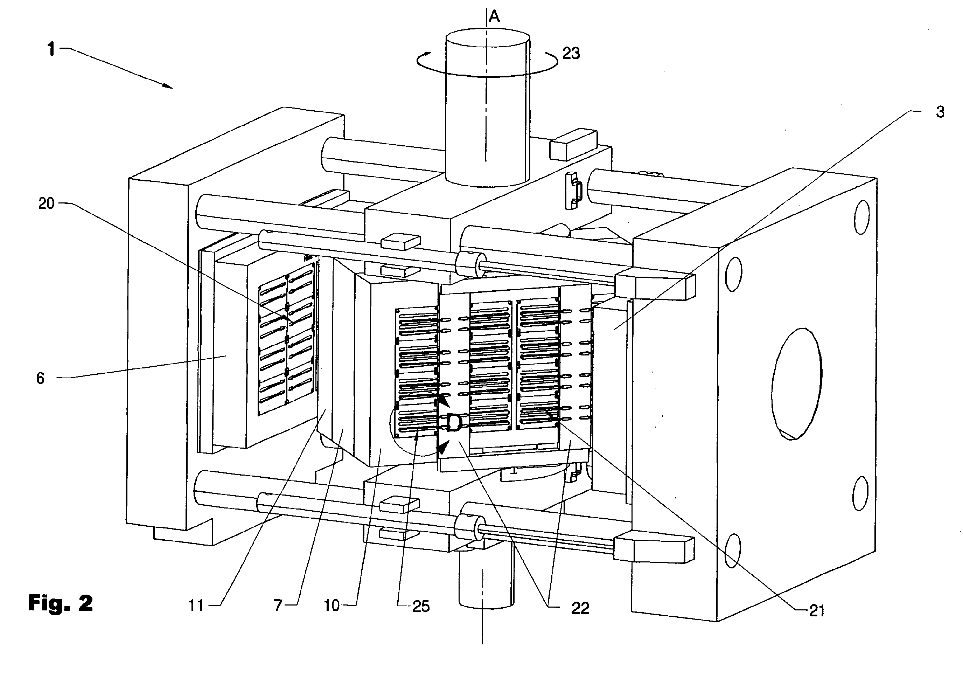

**Figur 2** zeigt schematisch und stark vereinfacht eine Momentaufnahme der Spritzgiessform 1 gemäss Figur 1 währenddem der dritte Formträger 7 und mit ihm die dritte und die vierte Formhälfte 10, 11 bei geöffneter Spritzgiessform 1 in Richtung eines Pfeils 23 um 180° um die Achse A gedreht werden. Wie zu erkennen ist, weist die dritte Formhälfte 10 (und in analoger Weise die vierte Formhälfte 11) Schieber 22 auf, die zum Verschieben von Objekten 25 von einer in eine weitere Kavität 21.1, 21.2 (vgl. Figur 3) dienen, währenddem die dritte und die vierte Formhälfte 10, 11 um die Achse A bewegt werden. In der weiteren Kavität 21.1 werden die Objekte nach dem Schliessen der Spritzgiessform 1 mit einer weiteren Materialkomponente umspritzt.

Die Formhälften 3, 6, 10, 11 weisen je vier Reihen von Kavitäten 20, 21 auf, wobei die Kavitäten 21.1, 21.2 der dritten und der vierten Formhälfte 10, 11 je doppelt ausgeführt sind. Dies ist erforderlich, um die Objekte 25 durch Verschieben von zwei Seiten mit einer weiteren Materialkomponente umspritzen zu können.

**Figur 3** zeigt den Ausschnitt D aus Figur 2. In dieser Figur ist mittels Pfeilen 34.1, 34.2, 34.3 schematisch dargestellt wie die Objekte 25 mittels dem Schieber 22 aus einer ersten in eine zweite Kavitätenhälfte 21.1, 21.2 überführt werden. Bei den Objekten 25 handelt es sich um Bürstenkörper von Zahnbürsten. Die Bürstenkörper 25 werden im Bereich ihres Kopfs 26 durch den Schieber 22 gehalten, währenddem ihre Griffe 27 von in eine weitere Kavität überführt werden.

## Patentansprüche

1. Vorrichtung (1) zum Spritzgiessen von Objekten (25) mit mehreren Kunststoffkomponenten, mit einer ersten, fest angeordneten Formhälfte (3), mit einer zweiten, zum Öffnen und Schliessen der Vorrichtung (1) gegenüber der ersten Formhälfte (3) beweglich angeordneten Formhälfte (6), und mindestens zwei weiteren, gegenüber der ersten und der zweiten Formhälfte (3, 6) gemeinsam beweglich angeordneten Formhälften (10, 11), die Schliessstellung der Vorrichtung (1) zwischen der ersten und der zweiten Formhälfte (3, 6) angeordnet sind, derart dass in zwei Trennebenen (32, 33), nämlich in einer ersten und einer zweiten Trennebene (32, 33) Kavitäten (20, 21) gebildet werden, **dadurch gekennzeichnet, dass** die beiden weiteren, gemeinsam beweglich angeordneten Formhälften (10, 11) Mittel (22) aufweisen, die bei geöffneter Vorrichtung (1) zum Transportieren eines Objekts (25) aus einer ersten Kavität (21.1) in eine zweite Kavität (21.2) dienen, derart dass das Objekt (25) in der zweiten Kavität (21.2) mit einer weiteren Materialkomponente umspritzt werden kann.

2. Vorrichtung (1) gemäss Patentanspruch 1, **dadurch gekennzeichnet, dass** das Mittel (22) ein Schieber (22) ist.

3. Vorrichtung (1) gemäss einem der vorangehenden Patentansprüche, **dadurch gekennzeichnet, dass** das Mittel (22) in eine Kavität (20, 21) integriert ist.

4. Vorrichtung (1) gemäss einem der vorangehenden Patentansprüche, **dadurch gekennzeichnet, dass** ein um eine Achse (A) drehbar gelagerter und in einem Winkel zu dieser verschiebbar angeordneter Formträger (7) vorhanden ist, der zur Aufnahme und gemeinsamen Bewegung der beiden weiteren Formhälften (10, 11) dient, derart dass die beiden weiteren Formhälften (10, 11) bei geöffneter Vorrichtung (1) durch Drehen des Formträgers (7) um die Achse (A) zwecks Bildung von Kavitäten (20, 21) alternativ mit der ersten oder der zweiten Formhälfte (3, 6) in Arbeitsposition bringbar sind.

5. Vorrichtung 1 gemäss Patentanspruch 4, **dadurch gekennzeichnet, dass** der Formträger (7) um 180° um die Achse (A) in einem rechten Winkel zu dieser verschiebbar ist.

6. Vorrichtung (1) gemäss Patentanspruch 5, **dadurch gekennzeichnet, dass** der Formträger (7) auf zwei Seiten durch je eine Traverse (8) gelagert ist, derart, dass der Formträger (7) bei geöffneter Vorrichtung (1) um die Achse (A) drehbar und gemeinsam mit den Traversen (8) verschiebbar ist.

7. Vorrichtung (1) gemäss Patentanspruch 6, **dadurch gekennzeichnet, dass** die Traversen (8) an Holmen (4) geführt sind.

8. Vorrichtung (1) gemäss Patentanspruch 7, **dadurch gekennzeichnet, dass** die Traversen (8) zum Ein- und Ausbau des Formträgers (7) und/oder der weiteren Formhälften (10, 11) unabhängig voneinander verschiebbar sind.

9. Vorrichtung (1) gemäss einem der Patentansprüche 7 oder 8, **dadurch gekennzeichnet, dass** die Holmen (4) zur Führung der zweiten, beweglichen Formhälfte (6) dienen.

10. Verfahren zum Spritzgiessen eines Objekts aus mehreren Kunststoffkomponenten, bei dem in einem ersten Schritt in einer Arbeitsposition einer Vorrichtung (1) ein erster flüssiger Kunststoff im Bereich einer ersten Trennebene (32) der Vorrichtung (1) zur Bildung eines Objekts (25) in eine erste Kavität (20, 21.1) gespritzt wird, in einem zweiten Schritt das Objekt (25) aus dem ersten Kunststoff bei geöffneter Vorrichtung (1), aus der ersten Kavität (20, 21.1) im Bereich der ersten Trennebene (32) in eine zweite Kavität (20, 21.2) im Bereich einer zweiten gegenüber der ersten beabstandeten Trennebene (33) gebracht wird, wo es in einem dritten Schritt in Arbeitsposition der Vorrichtung (1) mit einer weiteren Kunststoffkomponente umspritzt wird.

11. Verfahren gemäss Patentanspruch 10, **dadurch gekennzeichnet, dass** währenddem in der zweiten Kavität (20, 21.2) das Objekt (25) mit der weiteren Kunststoffkomponente umspritzt wird, gleichzeitig in der ersten Kavität (20, 21.1) ein weiteres Objekt (25) gespritzt wird.

12. Verfahren gemäss einem der Patentansprüche 10 oder 11, **dadurch gekennzeichnet, dass** das Objekt (25) während dem Überführen in die zweite Kavität (20, 21.1) um eine Achse (A) gedreht und seitlich verschoben (34.1, 34.2, 34.3) wird.

13. Verfahren gemäss einem der Patentansprüche 10 bis 12, **dadurch gekennzeichnet, dass** die erste Kavität (20, 21.1) durch eine erste Formhälfte (3) und alternativ durch eine von mindestens zwei weiteren, gegenüber der ersten Formhälfte (3) gemeinsam um eine Achse (A) drehbar und parallel zu dieser verschiebbar angeordneten Formhälften (10, 11) gebildet wird und dass die zweite Kavität (20, 21.2) durch eine weitere Formhälfte (6) gegenüber der ersten und den beiden gemeinsam um eine Achse drehbaren Formhälften (10, 11) und alternativ durch eine der beiden gebildet wird.
